# EUROPEAN PATENT APPLICATION

(11) **EP 1 535 698 A1**
(43) Date of publication of application: **01.06.2005**
(21) Application number: 03788032.5
(22) Date of filing: 04.08.2003
(51) Int. Cl.: B23K 26/40

(54) **LASER PROCESSING METHOD**

(30) Priority: 06.08.2002 JP 2002228311
(71) Applicant: NAMIKI SEIMITSU HOUSEKI KABUSHIKI KAISHA, Tokyo 123-8511 (JP)
(72) Inventor: KOITO, Shigeyuki, NAMIKI SEIMITSU HOUSEKI K. K., Tokyo 123-8511 (JP)
(74) Representative: Kitzhofer, Thomas, Dipl.-Ing.
(86) International application number: PCT/JP2003/009896
(87) International publication number: WO 2004/016387

(57) **Abstract**

An object of the invention is to provide a laser machining method that can improve machining performance by promoting to remove debris generated during machining from the work piece. A work piece 2 that is transparent to an ultra-short pulse laser beam L is irradiated from one side of the work piece 2 (front surface 2a) that faces the ultra-short pulse laser beam L. The irradiating ultra-short pulse laser beam L passes through the one side of the work piece 2 (front surface 2a) and is focused on the other side (rear surface 2b), and it machines the work piece 2 from or near a face (rear surface 2b) at the other side.

## Description

### TECHNICAL FILED

The present invention relates to a laser machining method, and particularly a laser machining method in which the work piece is machined by means of an ultra-short pulse laser beam.

### BACKGROUND ART

In conventional laser machining methods, the work piece is machined by applying high energy, by focusing the laser beam and irradiating the work piece with it. However, in the case of work pieces through which the laser beam passes (for example, transparent work pieces of materials like quartz glass, work pieces that are not transparent to visible light but which pass laser beams of certain wavelengths, and so on), machining is difficult because the laser beam passes through the work piece without its energy being absorbed, even when irradiated with a long pulse width laser or a continuous oscillation laser.

In recent years, technology has been developed for laser machining methods in which it is possible, using ultra-short pulse lasers (femtosecond lasers) having pulse widths between 1 femtosecond and 1 picosecond, to machine the work piece by a multi-photon absorption process, in portions where the laser beam is focused, even when the laser beam passes through the work piece. In the laser machining methods using these ultra-short pulse lasers to form holes in the work piece, machining is done on the front surface of the work piece (the surface facing the laser oscillator) by focusing the laser beam on the front surface with a lens for a certain period of time.

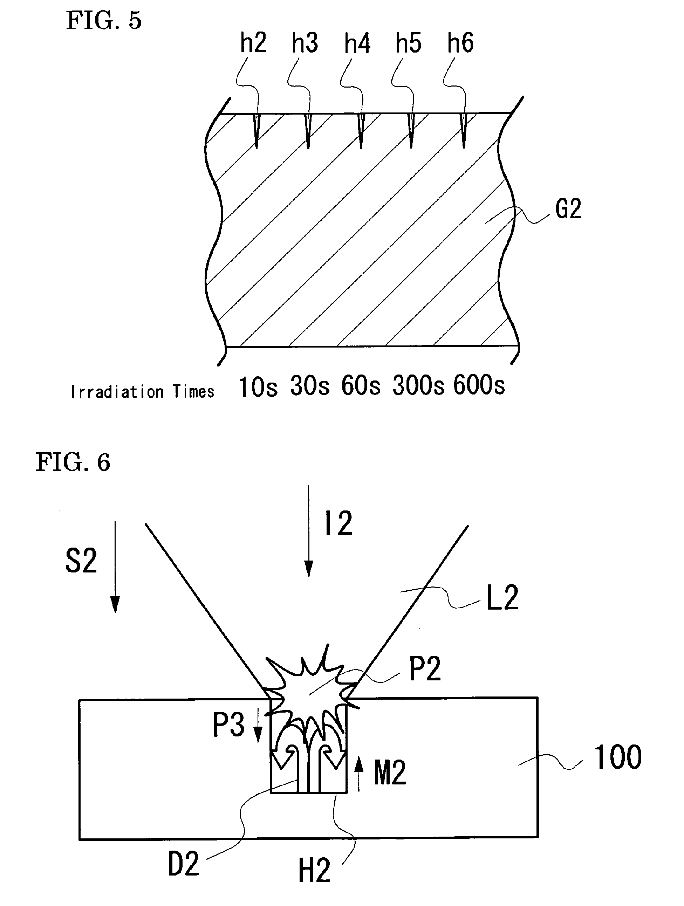

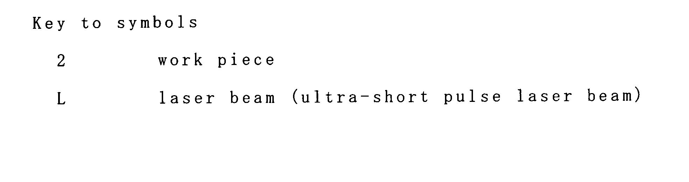

However, in the laser machining methods using these ultra-short pulse lasers, the direction of hole formation is the same direction as the direction of laser irradiation. As shown in FIG. **6,** when the direction of formation of hole **H2** (arrow **S2**) and the direction of laser irradiation (arrow **I2**) are the same direction, the direction of pressure (arrow **P3**) from the plasma **P2** generated by the laser beam **L2** is opposite the direction of scattering (arrow M2) of the debris generated by the laser irradiation. Because of that, the debris are left inside the hole **H2**, as shown by arrows **D2** in the figure, and they obstruct machining by subsequent laser irradiation. In the case of the formation of holes, therefore, it has not been possible to form a hole **H2** with a high aspect ratio (the ratio of the depth of the hole to its diameter).

Also, the hole that is formed is one with a diameter that is greater as it is closer to the direction of laser oscillator, or in other words, it is tapered. When the hole must not be tapered, it is possible, in most cases, to form the hole using a drill, but there are the problems of drill wear due to friction from the work piece, and the time required. For example, when forming a hole with a diameter ϕ of 500 µm in silicon dioxide (SiO₂), the machining speed is about 0.05 mm/s.

An object of the present is to provide a laser machining method that can improve machining performance by promoting to remove debris generated during machining from the work piece.

### DISCLOSURE OF INVENTION

The invention described in claim 1 is a laser machining comprising the steps of making an ultra-short pulse laser beam irradiate a work piece that is transparent to the ultra-short pulse laser beam from one side of the work piece, focusing the ultra-short pulse laser beam passing through the one side of the work piece on the other side of the work piece, and machining the work piece by the ultra-short laser beam from or near a surface face at the other side of the work piece.

According to the invention described in claim 1, the work piece is machined by the ultra-short pulse laser beam that is focused on the other side of the work piece, and so the machining begins on the other side of the work piece. When a concavity is formed in the work piece, the focal point of the ultra-short pulse laser beam that is focused on the other side is moved relatively to the work piece in such a manner that the focal point moves toward the interior of the work piece, and thus the work piece is machined. The debris generated by the machining are scattered from the concavity formed by laser irradiation in the easiest direction, which is from the site of generation toward the outside of the work piece. Meanwhile, the plasma generated by laser irradiation is always located at the point of machining irradiated by the laser beam, and so it is located upstream in the direction of scattering of debris. Accordingly, the direction of pressure generated by the production of plasma is substantially the same as the direction of scattering of debris, and so the scattering of debris is promoted by the plasma, and the debris can be prevented from accumulating inside the machined concavity. Thus, machining performance can be improved.

The meaning of "a work piece that is transparent to a laser beam" in the present invention is, for example, a transparent work piece such as quartz glass, or a work piece that is not transparent to visible light but which will pass a laser beam of a certain wavelength. It is not limited to cases of complete transparency where there is no absorption of the laser beam at all; the meaning includes materials for which the coefficient of absorption α < 1.

The invention described in claim 2 is the laser machining method of claim 1, wherein the ultra-short pulse laser beam is moved relatively from the work piece in such a manner that the focal point of the ultra-short pulse laser beam moves in a direction from the other side of the work piece to the one side of the work piece, whereby a hole can be formed in the work piece.

According to the invention described in claim 2, the hole is formed in the work piece by moving the focused ultra-short pulse laser beam relatively from the work piece in such a manner that the focal point of the ultra-short pulse laser beam moves in the direction from the other side of the work piece to the one side of the work piece. For that reason, scattering of the debris is promoted even as the hole becomes deep, and so it is possible to form holes that are deeper, and have a higher aspect ratio, than those formed by the conventional method in which the machining begins on the front surface of the work piece. Compared with mechanical machining using such means as a drill, it is possible to form a hole with a high aspect ratio in a shorter time.

Further, there is hardly any effect from residual debris, and so it is possible to form holes that are cylindrical, not tapered.

Further, with ultra-short pulse lasers it is possible to perform machining with few thermal effects, and so there is little optical damage to the inner surface of the hole in the work piece, and it is possible to form holes that do not require such after-treatment as mechanical polishing or heat treatment.

The invention described in claim 3 is a laser machining method of claim 1 or 2, wherein a primary constituent of the work piece, which is transparent to the ultra-short pulse laser beam, is a material such as aluminum oxide (Al₂O₃), silicon dioxide (SiO₂), diamond, silicon carbide (SiC), silicon (Si), or titanium oxide (TiO₂).

Herein, the meaning of "a material such as aluminum oxide (Al₂O₃), silicon dioxide (SiO₂), diamond, silicon carbide (SiC), silicon (Si), or titanium oxide (TiO₂)" is not limited to the individual substances aluminum oxide (Al₂O₃), silicon dioxide (SiO₂), diamond, silicon carbide (SiC), silicon (Si), or titanium oxide (TiO₂), but includes materials that include other substances such as various dopants. For example, "aluminum oxide" includes titanium doped sapphire, chromium doped sapphire (or ruby), sapphire, and so on. "Silicon dioxide (SiO₂)" includes quartz (crystal) and quartz glass.

According to the invention described in claim 3, because the ultra-short pulse laser beam focused on the other side of the work piece begins machining, such as forming a concavity, from the other side, or it forms a hole in the work piece by moving the focused ultra-short pulse laser beam relatively to the work piece in the direction from the other side to the one side of the work piece, it is possible to machine materials that have been difficult to machine by conventional methods, such as materials of which the primary constituent is aluminum oxide (Al₂O₃), silicon dioxide (SiO₂), diamond, silicon carbide (SiC), silicon (Si), and titanium oxide (TiO₂), and to do so with a high degree of precision that requires no after-treatment.

### BRIEF DESCRIPTION OF DRAWINGS

FIG. **1** is an explanatory concept diagram of a laser machining apparatus that performs machining using a laser machining method of the present invention.

FIG. **2** is an explanatory diagram showing steps of forming a hole in a work piece by the laser machining apparatus shown in FIG. **1.**

FIG **3** is an explanatory diagram showing the relationship between a plasma and debris when the hole is formed by the laser machining apparatus shown in FIG. **1**.

FIG **4** is an explanatory diagram showing a hole formed in a work piece in test case 1.

FIG. **5** is an explanatory diagram showing a hole formed in a work piece in test case 2.

FIG. **6** is an explanatory diagram showing the relationship between a plasma and debris when a hole is formed by a conventional laser machining method.

### BEST MODE FOR CARRYING OUT THE INVENTION

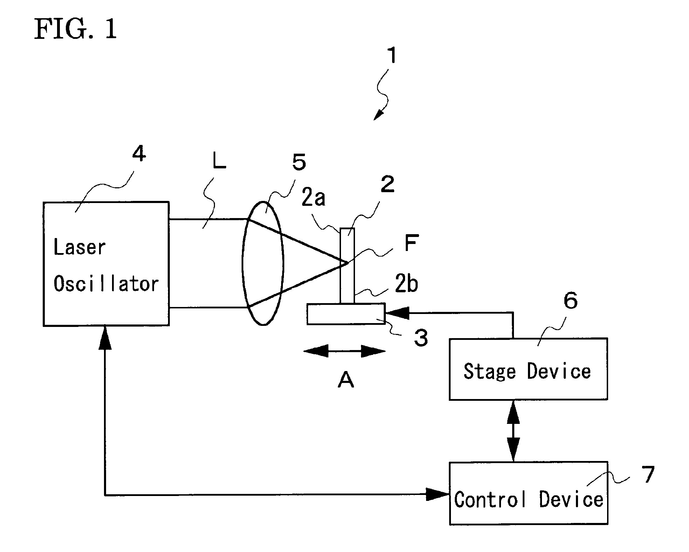

An embodiment of the present invention will be described below with reference to the accompanying drawings of FIGS. **1** through **5**.

FIG. **1** shows an embodiment of a laser machining device that implements a laser machining method according to the present invention. In this laser machining apparatus 1, a laser oscillator **4** irradiates a work piece **2** fixed to a stage **3** with an ultra-short pulse laser beam (with a pulse width of at least 1 femtosecond and no more than 1 picosecond, hereafter referred to as a laser beam **L**). Irradiation is carried out from the front surface **2a** (one side) of the work piece **2**, and machining begins from the rear surface 2b (the other side) of the work piece **2**.

Between the laser oscillator **4** and the work piece **2** is mounted a lens **5** that focuses, from the front surface **2a**, the laser beam **L** from the laser oscillator **4**. A stage **3** can be moved, relatively to the lens **5**, along the direction of the axis of the laser beam **L** (arrow **A**) by means of a motor or other stage drive **6**, and so the work piece **2** and the lens **5** can be moved relatively to each other. The laser oscillator **4** and stage drive **6** are controlled by a control device **7** in accordance with the machining conditions.

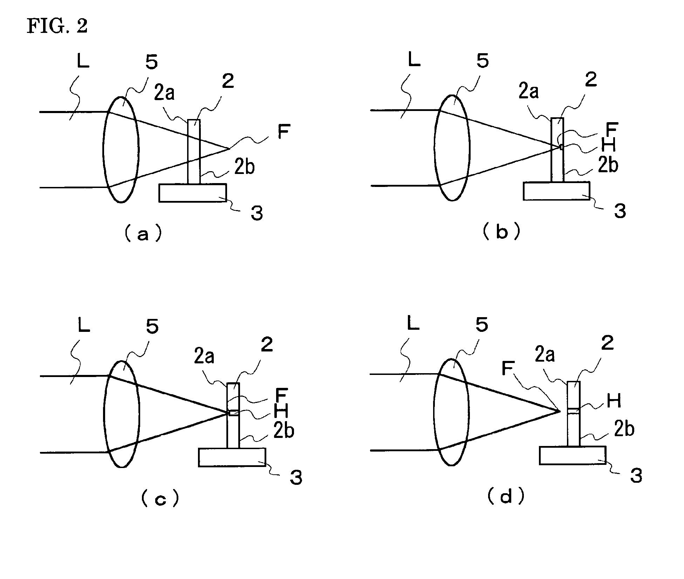

Next, the laser machining method of the present invention, in which the laser machining apparatus is used, is described with reference to FIG **2**. Herein, the work piece **2** can be anything that is transparent to the laser beam **L** irradiated by the laser oscillator **4**; this embodiment uses a plate of transparent quartz glass as the work piece **2**.

At the time that laser machining begins, the control device **7** controls the stage drive **6** to move the stage **3** so that the focal point **F** created by the lens **5** will be at the rear surface **2b** (the other side) of the work piece **2**, as shown in FIG. **2 (a)**. Then the control device **7** controls the laser oscillator 4 to irradiate the work piece **2** with the laser beam **L**.

Next, as irradiation by the laser beam **L** continues, the control device **7** controls the stage **3** to move so that the work piece **2** moves backwards (to the right in FIG. **2**) at a specified speed (the machining speed). By this means the focal point **F** of the laser beam **L** focused by the lens 5 moves relatively to the work piece **2**, from the rear surface **2b** to the front surface **2a** of the work piece **2**. Because of this movement, when the focal point **F** is positioned at the rear surface **2b** of the work piece **2**, that portion of the work piece **2** is machined away by multi-photon absorption process of the laser beam **L** focused at the focal point **F**; as shown in FIG. **2 (b)**, a hole **H** is formed in the work piece **2**.

After that, as shown in FIG. **2 (c)**, the hole **H** is made deeper by the laser beam **L** focused by the lens **5** in accordance with the movement of the stage **3**. When the focal point **F** is positioned at the front surface **2a** of the work piece **2**, as shown in FIG. **2 (d)**, the hole **H** penetrates through the work piece **2**.

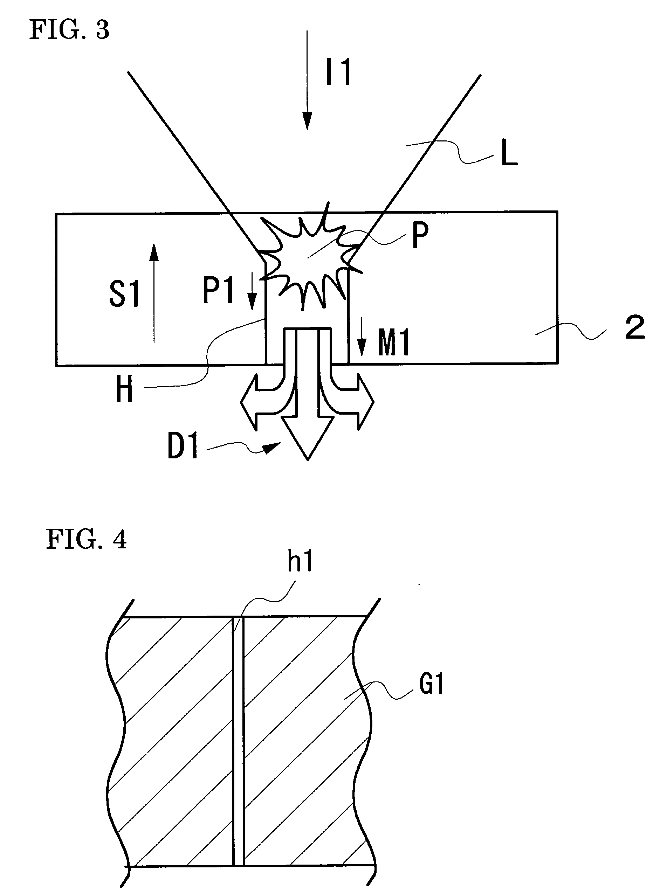

When this hole H is formed, as shown in FIG. **3**, the direction of formation of the hole **H** (arrow **S1**) and the direction of laser irradiation (arrow **I1**) are opposite, and so the direction of pressure (arrow **P1**) generated by the plasma **P** generated by the laser beam **L** and the direction of scattering of debris (arrow **M1**) are opposite the direction of formation of the hole **H**. Further, at the time of formation of the hole **H**, the plasma **P** generated by the laser beam **L** is always present at the point of machining irradiated by the laser beam **L**, and consequently the debris are generated upstream in the direction of scattering; thus, scattering of debris (arrow **D1**) is accelerated by the pressure of the plasma **P.** In other words, the scattering of debris (arrow **D1**) is promoted by the plasma **P,** and so it is possible to form holes **H** with high aspect ratios.

Further, until the hole **H** penetrates the work piece **2**, debris are scattered toward the rear surface **2b**, which is opposite the direction in which the lens **5** is positioned. Because of that, the scattered debris are prevented from adhering to the lens **5**.

Further, because there are few thermal effects from ultra-short pulse lasers, there is little optical damage to the interior surface of the hole in the work piece, and it is possible to form holes with no need for after-treatment such as mechanical polishing or heat treatment.

Thus, the machining method of the present invention, when compared to conventional machining using such means as drills, is capable of greatly shortening the machining time; it also provides the same level of machinability as drill processing.

In addition, the machining method of the present invention can be used with work pieces of which the primary constituent is aluminum oxide (Al₂O₃), silicon dioxide (SiO₂), diamond, silicon carbide (SiC), silicon (Si), or titanium dioxide (TiO₂). When an ultra-short pulse laser and this machining method are used, even on work pieces of hard-to-machine materials of great hardness, it is possible to machine with high precision in a short time.

Although these materials are difficult to machine because of their great hardness, they have great utility and many applications, and they are much demanded as industrial products.

Accordingly, because of the capability for machining with high aspect ratios with few optical damages, the laser machining method of the present invention can be applied to the production of products used in a variety of fields, including dice, guides for precision parts, and flow channels in µTAS (Micro Total Analysis Systems) that have been used in such fields as chemistry in recent years.

Next, results of testing by the inventors will be described below.

These tests were done by forming holes in various work pieces using the laser machining method of the present invention and a conventional laser machining method.

### [Test case 1]

In test case 1, holes were formed in work pieces under a normal atmosphere using the laser machining method of the present invention.

The conditions of test case 1 are shown below. Now, the laser oscillator **4** used in test case 1 was a femtosecond laser that generated an ultra-short pulse laser beam.

| | |
|---|---|
| Central wavelength | approximate 800 nm |
| Pulse width | approximate 150 to 200 fs |
| Repetition frequency | 1 kHz |
| Power | 200 mW |
| Lens | 5-power objective lens |
| Work piece | quartz glass |
| Machining speed | 100 µm/s |

Using the laser machining method described above, quartz glass **G1** was irradiated with the laser beam **L,** and a hole **h1** with a depth of 3.2 mm was formed as shown in FIG. **4.** The hole with the uniform internal diameter could be formed as shown in FIG. **4**.

### [Test case 2]

A conventional laser machining method was also applied using the laser machining apparatus **1** described above. Specifically, the control device **7** controlled the stage drive **6** to move the stage **3** so that the focal point **F** of the lens **5** was positioned at the front surface **2a** of the work piece **2** and the stage **3** was fixed in position. Then the control device **7** controlled the laser oscillator **4** to irradiate the laser beam **L** in the direction of the work piece **2**.

Then the control device 7 continued the irradiation by the laser beam L for specified times (the irradiation times) and formed holes in the work piece **2**.

The conditions of test case **2** are shown below. Now, the laser oscillator **4** used in test case **2** was a femtosecond laser that generated an ultra-short pulse laser beam.

| | |
|---|---|
| Central wavelength | approximate 800 nm |
| Pulse width | approximate 150 to 200 fs |
| Repetition frequency | 1 kHz |
| Power | 590 mW |
| Lens | f= 40 lens |
| Work piece | quartz glass |
| Irradiation times | 10 s, 30 s, 60 s, 300 s, 600 s |

Using the conventional laser machining method described above, quartz glass **G2** was irradiated with the laser beam **L** with irradiation times of 10 s, 30 s, 60 s, 300 s, and 600 s, and holes **h2** through **h**6 were formed.

The results regarding the irradiation times and the holes h2 through h6 that were formed are shown in Table **1**.

**[Table 1]**

| | Irradiation times (sec) | | | | |
|---|---|---|---|---|---|
| | 10 | 30 | 60 | 300 | 600 |
| Depth of hole (mm) | 0.785 | 0.785 | 0.785 | 0.785 | 0.785 |
| (References of holes in FIG. 5) | **(h2)** | **(h3)** | **(h4)** | **(h5)** | **(h6)** |

As shown in Table **1**, the depth of the holes h2 through h6 formed by the conventional method was always the same―0.785 mm―even though the irradiation times were different. From this it can be seen that it is difficult to form deeper holes. On the other hand, the depth of the hole **h1** formed with the machining method of the present invention was 3.2 mm, and the irradiation time to form the hole **h1** was 32 seconds. Thus, the machining method of the present invention is able to form holes that are much deeper than previously possible, and in a short time.

Further, as shown in FIG. **5**, the holes **h2** through **h6** have a tapered shape, with the inside diameter growing smaller toward the tip.

Thus, it can be seen that in contrast to all the holes **h2** through **h6** in test case **2**, which were formed as tapered holes, the hole **h1** in test case **1** was formed as an untapered, cylindrical hole in the work piece, as shown in FIG. **4.** It is possible, therefore, to form a hole **h1** with a high aspect ratio using the machining method of the present invention.

Now, the reason that an f = 40 lens was used as the lens in test case **2** is that if the same lens used in test case **1** had been used, the holes formed would have been almost immeasurably small.

Now, the present is not limited to the embodiment described above; appropriate variations can of course be made.

For example, the above-described embodiment was explained using the example of quartz glass as the work piece **2**, but any substance that is transparent to the laser beam **L** can be used as the work piece. It is possible to use, for example, a substance of which the primary constituent is aluminum oxide (Al₂O₃), silicon dioxide (SiO₂), diamond, silicon carbide (SiC), silicon (Si), or titanium dioxide (TiO₂). Besides these materials, the machining method of the present invention can be applied to any materials which will be transparent to the laser beam **L**, and to materials that are non-transparent to visible light but transparent to laser beams of certain wavelengths.

Further, in the above-described embodiment the work piece **2** is moved relatively to the lens **5**, but it is possible to move the lens 5 and not the work piece **2**; any arrangement in which the two are moved relatively to the other is acceptable.

Further, the present embodiment was explained in terms of the use of the laser machining apparatus **1** in a normal atmosphere. Needless to say, that does not limit the invention; the laser machining apparatus **1** may also be used in, for example, a vacuum.

### INDUSTRIAL APPLICABILITY

According to the invention described in claim 1, the work piece is machined beginning on the other side, and when a concavity is formed in the work piece, machining is done by moving the ultra-short pulse laser beam that is focused on the other side in the opposite direction so that the focal point moves into the work piece. The debris generated by the machining are scattered toward the outside of the work piece. At the same time, the plasma generated by laser irradiation is always located upstream of the debris. In other words, the direction of pressure generated by the production of plasma is substantially the same as the direction of scattering of debris, and so the scattering of debris is promoted by the plasma. Thus, machining performance can be improved.

According to the invention described in claim 2, scattering of the debris is not obstructed as the hole becomes deeper, and so it is possible to form holes that are deeper, and have a higher aspect ratio, than those formed by a conventional method in which the machining begins on the front surface of the work piece. Especially compared with mechanical machining using such means as a drill, it is possible to form a hole with a high aspect ratio in a shorter time.

In particular, when holes were formed by the conventional laser machining methods, the holes were tapered, with a larger diameter at the entrance. With the present invention, however, plasma promotes the scattering of debris, and there is hardly any effect from residual debris, and so it is possible to form holes that are cylindrical.

Further, with ultra-short pulse lasers it is possible to perform machining with few thermal effects, and so there is little optical damage to the inner surface of the hole in the work piece, and it is possible to form holes that do not require such after-treatment as mechanical polishing or heat treatment.

Moreover, the time required for machining can be shortened greatly in comparison with machining using conventional means such as drills.

According to the invention described in claim 3, because the ultra-short pulse laser beam focused on the other side of the work piece begins machining, such as forming a concavity, on the other side, or it forms a hole in the work piece by moving the irradiating ultra-short pulse laser beam relatively in the direction from the other side to the one side of the work piece, it is possible to machine materials that have been difficult to machine by conventional methods, such as materials of which the primary constituent is aluminum oxide (Al₂O₃), silicon dioxide (SiO₂), diamond, silicon carbide (SiC), silicon (Si), or titanium oxide (TiO₂), and to do so with a high degree of precision that requires no after-treatment.

## Claims

1. A laser machining method, comprising the steps of:
making an ultra-short pulse laser beam irradiate a work piece that is transparent to said ultra-short pulse laser beam from one side of the work piece;
focusing said ultra-short pulse laser beam passing through the one side of the work piece on the other side of the work piece, and
machining the work piece by said ultra-short laser beam from or near a surface face at the other side of the work piece.

2. The laser machining method of claim 1, wherein said ultra-short pulse laser beam is moved relatively from the work piece in such a manner that a focal point of the ultra-short pulse laser beam moves in a direction from the other side of the work piece to the one side of the work piece, whereby a hole can be formed in the work piece.

3. The laser machining method of claim 1 or 2, wherein a primary constituent of the work piece, which is transparent to the ultra-short pulse laser beam, is a material of aluminum oxide (Al₂O₃), silicon dioxide (SiO₂), diamond, silicon carbide (SiC), silicon (Si), or titanium oxide (TiO₂).
